# FASCICULE DE BREVET EUROPEEN

(11) **EP 2 791 081 B1**
(45) Date de publication et mention de la délivrance du brevet: **20.07.2016**
(21) Numéro de dépôt: 12806578.6
(22) Date de dépôt: 27.11.2012
(51) Int. Cl.: C04B 35/565, C04B 35/628

(54) **PROCEDE DE TRAITEMENT DE FIBRES CERAMIQUES PAR PHOSPHATATION**
PHOSPHATIERUNGSBEHANDLUNGSVERFAHREN VON KERAMISCHEN FASERN
PHOSPHATING-METHOD FOR TREATING CERAMIC FIBERS

(30) Priorité: 14.12.2011 FR 1161626
(43) Date de publication de la demande: 22.10.2014
(73) Titulaire: HERAKLES, 33185 Le Haillan (FR); Centre National de la Recherche Scientifique (CNRS), 75016 Paris (FR)
(72) Inventeur: MAZERAT, Stéphane, F-59720 Louvroil (FR); PAILLER, René, F-33610 Cestas (FR); LOISON, Sylvie, F-33160 Saint Medard en Jalles (FR); PHILIPPE, Eric, F-33700 Merignac (FR)
(74) Mandataire: Desormiere, Pierre-Louis
(86) Numéro de dépôt international: PCT/FR2012/052728
(87) Numéro de publication internationale: WO 2013/088017

(56) Documents cités:
- EP-A1- 1 013 412
- WO-A1-02/16263
- GB-A- 2 467 928

## Description

### Arrière-plan de l'invention

La présente invention concerne les fibres de carbure de silicium (SiC) utilisées comme renfort dans la fabrication de matériaux composites et plus particulièrement de matériaux composites thermostructuraux formés d'un renfort fibreux densifié par une matrice.

Les matériaux composites thermostructuraux sont caractérisés par leurs propriétés mécaniques qui les rendent aptes à constituer des pièces de structure et par leur capacité à conserver ces propriétés mécaniques à des températures élevées. Cependant, les fibres céramiques, telles que les fibres de carbure de silicium (SiC), sont sensibles à l'oxydation lorsqu'elles sont exposées à des températures élevées (par exemple entre 300°C et 1500°C) en milieu oxydant notamment en présence d'air, de vapeur d'eau et, plus généralement, en présence de toute phase gazeuse ou liquide contenant de l'oxygène ou un de ses composés.

L'oxydation des fibres SiC a un impact direct sur leur durée de vie et, par conséquent, sur celle du matériau composite dont elles constituent le renfort.

Le document WO 2010/076475 décrit une méthode de traitement de fibres céramiques comprenant un premier traitement thermique en voie gazeuse réactive réalisé avec au moins un premier gaz réactif de type halogène formant, par transformation chimique de la fibre en surface, une couche superficielle constituée majoritairement de carbone, et un deuxième traitement thermique en voie gazeuse réactive réalisé avec au moins un deuxième gaz réactif éliminant la couche superficielle formée en surface lors de la transformation chimique. L'utilisation de ces deux traitements thermiques avec des gaz réactifs différents et adaptés permet d'éliminer totalement la couche superficielle de matériau des fibres contenant les défauts les plus influents sur la limitation des propriétés mécaniques et de la durée de vie des fibres. Cependant, cette méthode de traitement n'améliore pas la résistance des fibres vis-à-vis de l'oxydation.

Un traitement thermique de fibres céramiques avec un gaz halogéné a par ailleurs été utilisé dans le document WO 2005/092610 en tant qu'étape intermédiaire d'un procédé de réalisation de revêtement sur fibres céramiques de type BAN (Bore-Aluminium-Azote), formé par exemple d'un mélange de BN et Al(O)N, dans le but d'améliorer la tenue à l'oxydation des composites céramiques.

Si des fibres céramiques munies d'un tel revêtement présentent une amélioration de leur tenue à l'oxydation, celle-ci reste encore insuffisante notamment vis-à-vis de l'augmentation de la durée de vie de ces dernières.

Or, il existe un besoin pour protéger individuellement les fibres SiC contre l'oxydation.

### Objet et résumé de l'invention

La présente invention a pour but de remédier à ces inconvénients en proposant un traitement de surface des fibres de carbure de silicium qui permet d'augmenter individuellement la résistance de chaque fibre en atmosphère oxydante et en température, notamment entre 300°C et 1500°C.

Ce but est atteint du fait que, conformément à l'invention, les fibres de carbure de silicium sont soumises à un traitement thermique de phosphatation en voie gazeuse réactive de manière à former autour de chaque fibre un revêtement de protection contre l'oxydation comprenant une couche de surface de cristaux de pyrophosphate de silicium et au moins un système bicouche sous-jacent comprenant une couche d'un verre phosphosilicaté et une couche de carbone microporeux.

Le traitement de l'invention permet de former à la surface de chaque fibre traitée un système monocouche ou multicouche qui empêche la céramique sous-jacente de la fibre de s'oxyder. La fibre résultante est de même nature chimique que la fibre initiale, mais possède une résistance à l'oxydation accrue qui permet d'augmenter significativement sa durée de vie en atmosphère oxydante à haute température et, par conséquent, celle du matériau composite auquel elle appartient.

Selon une caractéristique particulière de l'invention, une couche de carbone microporeux ou micro-mésoporeux est formée sur la surface de chaque fibre avant le traitement thermique de phosphatation en voie gazeuse réactive.

La formation préalable d'une couche de surface de carbone microporeux ou micro-mésoporeux permet d'homogénéiser le traitement de phosphatation et d'obtenir un revêtement de protection plus uniforme.

Une couche de carbone micro-mésoporeux peut être réalisée par une attaque de chaque fibre en surface avec un agent phosphoré en voie gazeuse suivie d'un traitement d'élimination du verre phosphosilicaté et du pyrophosphate de silicium formés lors de l'attaque à l'acide phosphorique vaporeux. Le traitement d'élimination du verre phosphosilicaté et du pyrophosphate de silicium peut être réalisé par attaque des fibres en surface avec un composé basique. La couche de carbone microporeux ou micro-mésoporeux est interposée entre la couche de surface de cristaux de pyrophosphate de silicium et le ou les systèmes bicouches de verre phosphosilicaté et de carbone microporeux.

Selon une variante, la formation d'une couche de carbone microporeux est réalisée par traitement thermique en voie gazeuse réactive réalisé avec au moins un gaz réactif de type halogène choisi parmi au moins le dichlore, le difluor et le chlorure d'hydrogène.

Selon un aspect particulier de l'invention, le revêtement de protection contre l'oxydation présente une épaisseur comprise entre 50 nm et 1µm et plus préférentiellement entre 100 nm et 500 nm.

Le traitement thermique de phosphatation en voie gazeuse réactive et les éventuels autres traitements sont réalisés de préférences à des températures inférieures à la température de stabilité thermique des fibres de carbure de silicium.

L'invention vise également un procédé de fabrication d'une préforme fibreuse comprenant la formation d'une structure fibreuse à partir de fibres de carbure de silicium, caractérisé en ce que les fibres ont été traitées conformément au procédé de traitement de l'invention. Les fibres peuvent être traitées avant ou après la formation de la structure fibreuse.

L'invention concerne encore un procédé de fabrication d'une pièce en matériau composite comprenant la réalisation d'une préforme fibreuse conformément au procédé de fabrication d'une préforme fibreuse selon l'invention et la densification de la préforme.

Par ailleurs, l'invention a également pour objet une structure fibreuse comprenant des fibres de carbure de silicium caractérisée en ce que chaque fibre comporte sur au moins une partie de sa surface un revêtement de protection contre l'oxydation comprenant une couche de surface de cristaux de pyrophosphate de silicium et au moins un système bicouche sous-jacent comprenant une couche d'un verre phosphosilicaté et une couche de carbone microporeux.

Selon une caractéristique particulière de l'invention, chaque fibre de carbure de silicium comporte en outre sur au moins une partie de sa surface une couche de carbone microporeux ou micro-mésoporeux, ladite couche de carbone microporeux ou micro-mésoporeux étant interposée entre la couche de surface de cristaux de pyrophosphate de silicium et ledit au moins un système bicouche comprenant une couche d'un verre phosphosilicaté et une couche de carbone microporeux.

L'invention concerne enfin une pièce en matériau composite comprenant un renfort fibreux constituée par une structure fibreuse selon l'invention.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une microphotographie montrant une fibre SiC munie d'un revêtement de protection contre l'oxydation à morphologie bicouche multiple obtenu par phosphatation conformément au procédé de l'invention;
- la figure 2 est une microphotographie montrant une fibre SiC munie d'un revêtement de protection contre l'oxydation à morphologie bicouche unique obtenu par phosphatation conformément au procédé de l'invention;

- la figure 3 est une microphotographie de la fibre de la figure 2 après élimination par attaque basique de la couche de surface de cristaux de pyrophosphate de silicium et de la couche d'un verre phosphosilicaté du revêtement de protection;
- la figure 4 est une microphotographie montrant une fibre SiC munie d'un revêtement de protection contre l'oxydation obtenu par chloration suivie d'une phosphatation de la fibre SiC conformément au procédé de l'invention.

### Description détaillée de modes de réalisation

Le procédé de la présente invention propose une solution pour former un revêtement de protection monocouche ou multicouche contre l'oxydation en surface des fibres de carbure de silicium (SiC). Le procédé de l'invention comprend un traitement consistant à attaquer la surface des fibres SiC avec un composé phosphoré à l'état gazeux.

Ce traitement correspond à un traitement thermique de phosphatation en voie gazeuse réactive qui consiste à mettre la surface des fibres SiC en contact avec des vapeurs d'un agent phosphoré, comme par exemple de l'acide phosphorique (H₃PO₄) ou encore du pentoxide de phosphore (P₂O₅) mélangé avec de la vapeur d'eau, qui va transformer chimiquement le matériau céramique de la fibre en surface de manière à former un revêtement d'un matériau différent constitué essentiellement d'une couche de surface de cristaux de pyrophosphate de silicium (SiP₂O₇) et d'un ou plusieurs systèmes bicouches comprenant chacun une couche d'un verre phosphosilicaté situé du côté de la couche de surface de cristaux de pyrophosphate de silicium et une couche de carbone microporeux située du côté de la fibre.

La voie gazeuse réactive permet d'attaquer la fibre seulement en surface et de préserver le reste de la fibre. Le traitement de phosphatation est réalisé de préférence à une température supérieure à 580°C afin d'éviter des cinétiques de réaction trop faibles et inférieures à 850°C pour éviter une oxydation du carbone du revêtement de protection formé et une réduction de l'agent phosphoré.

Les fibres sont traitées dans une enceinte comprenant des entrées de gaz réactifs permettant de balayer les fibres avec des vapeurs d'un agent de phosphatation, tel que des vapeurs d'acide phosphorique, et au moins un conduit d'évacuation pour éliminer les effluents gazeux dégagés lors des réactions chimiques. Le traitement thermique est réalisé à des températures inférieures à la température de stabilité thermique des fibres afin d'éviter ainsi une dégradation thermique des fibres rédhibitoire pour les propriétés mécaniques des fibres. Par exemple, pour des fibres Si-C-O, qui sont thermostables jusqu'à environ 1000°C, le traitement thermique est réalisé à des températures inférieures à 700°C.

Suivant les conditions du traitement de phosphatation, le revêtement de protection contre l'oxydation peut présenter une morphologie bicouche unique, c'est-à-dire un revêtement de protection comprenant, en dessous de la couche de surface de cristaux de pyrophosphate de silicium, un seul système bicouche comprenant une couche d'un verre phosphosilicaté et une couche de carbone microporeux. Le revêtement de protection contre l'oxydation peut également présenter une morphologie bicouche multiple, c'est-à-dire un revêtement de protection comprenant, entre la couche de surface de cristaux de pyrophosphate de silicium et la fibre, une pluralité de systèmes bicouches comprenant chacun une couche d'un verre phosphosilicaté et une couche de carbone microporeux. Chaque système comprend environ une proportion égale de carbone microporeux et de verre phosphosilicaté. La morphologie bicouche unique ou multiple du revêtement est obtenue en fonction des conditions de température, de durée et de concentration d'acide définies lors du traitement de phosphatation. Plus précisément, afin d'obtenir un revêtement avec une morphologie bicouche multiple, on réalise un traitement de phosphatation à une température d'environ 650°C pendant quelques heures et avec une concentration d'acide maximale, par exemple avec de l'acide phosphorique en concentration de 14,6 mol/L. Un revêtement ayant une morphologie bicouche unique peut être obtenu avec un traitement de phosphatation réalisé à une température plus haute ou plus basse que 650°C.

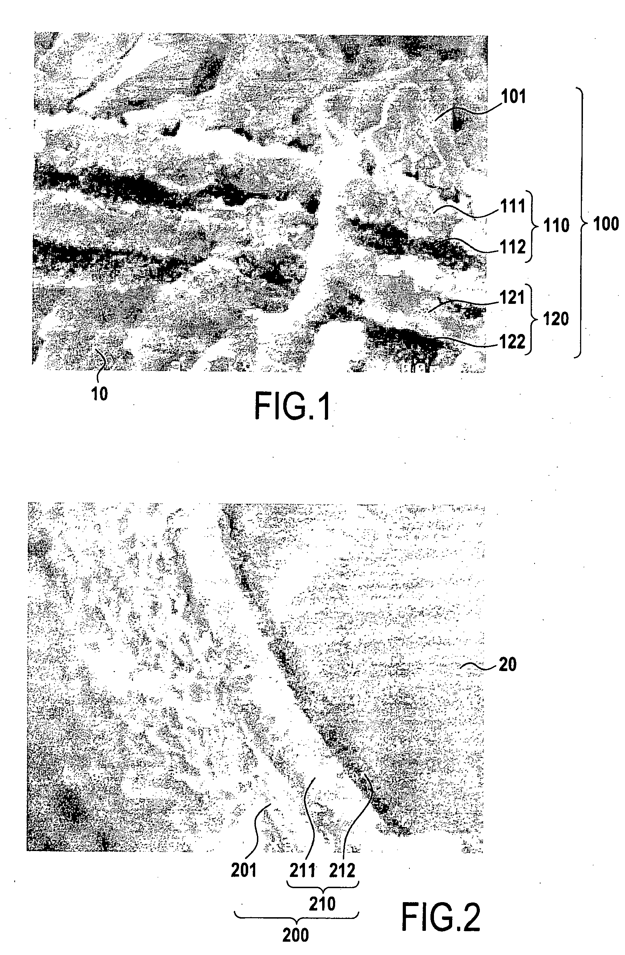

La figure 1 montre une fibre SiC 10 recouverte d'un revêtement de protection 100 selon l'invention qui a été obtenu par traitement direct de phosphatation sur fibre SiC brutes de type Tyranno S réalisé dans un four maintenu à une température de 600°C pendant 7 heures et dans lequel la phase gazeuse d'agent phosphoré est obtenue avec de l'acide phosphorique à 14,6 mol/L avec un débit d'acide de 1,21.10⁻⁶ L/s et un débit d'azote de 1,39.10⁻³ L/s. Avec ces conditions de traitement, on obtient un revêtement de protection 100 qui présente une morphologie bicouche multiple, c'est-à-dire qui comprend ici une couche de surface de cristaux de pyrophosphate de silicium 101 et au moins 2 systèmes bicouches 110 et 120 comprenant chacun une couche d'un verre phosphosilicaté 111, respectivement 121, et une couche de carbone microporeux 112, respectivement 122.

La figure 2 montre une fibre SiC 20 recouverte d'un revêtement de protection 200 selon l'invention qui a été obtenu par traitement direct de phosphatation sur fibre SiC brutes de type Tyranno S réalisé dans un four maintenu à une température de 775°C pendant 1 heure et dans lequel la phase gazeuse d'agent phosphoré est obtenue avec de l'acide phosphorique à 14,6 mol/L avec un débit d'acide de 1,21.10⁻⁶ L/s et un débit d'azote de 1,39.10⁻³ L/s. Avec ces conditions de traitement, on obtient un revêtement de protection 200 qui présente une morphologie bicouche unique, c'est-à-dire qui comprend ici une couche de surface de cristaux de pyrophosphate de silicium 201 et un seul système bicouche 210 comprenant une couche d'un verre phosphosilicaté 211 et une couche de carbone microporeux 212.

Par ailleurs, l'épaisseur du revêtement de protection contre l'oxydation formé par transformation chimique de la fibre en surface peut être ajustée en contrôlant une ou plusieurs des conditions suivantes du traitement de phosphatation : température, durée et concentration de l'agent phosphoré. L'épaisseur du revêtement de protection obtenu est comprise entre 50 nm et 1µm et plus préférentiellement entre 100 nm et 500 nm.

Selon une variante de mise en oeuvre du procédé de l'invention, une couche de carbone micro-mésoporeux ou microporeux est formée sur la surface de chaque fibre avant la formation du revêtement de protection contre l'oxydation.

Suivant un premier aspect de cette variante, la formation d'une couche de carbone micro-mésoporeux est réalisée par une attaque en température de chaque fibre en surface avec un agent phosphoré en phase gazeuse (ex. acide phosphorique vaporeux) suivie d'un traitement d'élimination du verre phosphosilicaté et du pyrophosphate de silicium formés lors de l'attaque. Les conditions opératoires de cette attaque sont les mêmes que celles décrites ci-avant pour le traitement de phosphatation permettant d'obtenir un revêtement monocouche ou multicouche.

L'élimination du verre phosphosilicaté et du pyrophosphate de silicium peut être réalisé par attaque des fibres en surface avec un composé basique telle que la soude. En effet, ces composés sont sensibles à l'hydrolyse en solution alcaline par dissolution dont la cinétique dépend bien entendu du ph et de la température de la solution. A titre d'exemple, le verre phosphosilicaté et le pyrophosphate de silicium sont éliminés par trempage des fibres dans de la soude 1M à 80°C pendant 1 heure, cette opération étant répétée 3 fois avec rinçage à l'eau distillée et séchage entre chaque trempage.

L'épaisseur de la couche de carbone micro-mésoporeux peut être ajustée en contrôlant la température et/ou la durée du traitement thermique sous vapeurs d'agent phosphoré.

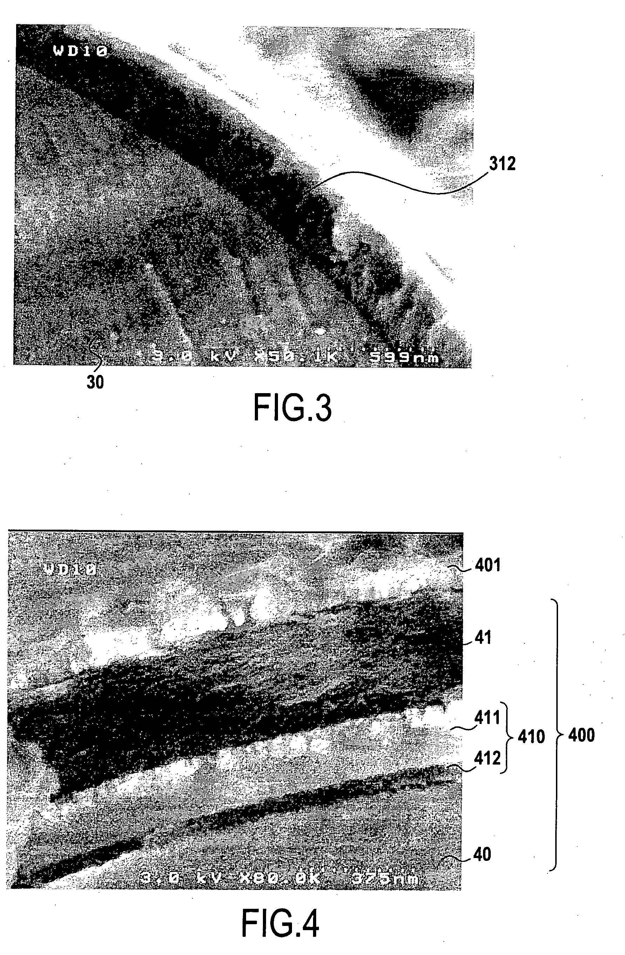

La figure 3 montre une fibre SiC 30 obtenue à partir de la fibre SiC 20 de la figure 2 après avoir réalisé une attaque basique sur cette dernière afin d'éliminer la couche de surface de cristaux de pyrophosphate de silicium 201 et la couche de verre phosphosilicaté 211 du système bicouche 210 et ne laisser subsister sur la fibre 30 qu'une couche de carbone micro-mésoporeux 312 issue de la couche de carbone 212.

Après l'attaque basique, les fibres sont ensuite de nouveau soumises, comme décrit ci-avant, à un traitement thermique de phosphatation en voie gazeuse réactive afin de former le revêtement de protection contre l'oxydation. Dans ce cas, la couche de carbone micro-mésoporeux agit comme une membrane de diffusion des espèces, la transformation de la fibre au contact des espèces gazeuses de phosphatation étant réalisée sous la couche de carbone micro-mésoporeux. Dans ce cas, le ou les systèmes bicouches de verre phosphosilicaté et de carbone microporeux sont formés sous la couche de carbone micro-mésoporeux formée préalablement tandis que la couche de cristaux de pyrophosphate de silicium est formée au-dessus de la couche de carbone micro-mésoporeux.

Selon un deuxième aspect de la variante de mise en oeuvre du procédé de l'invention, une couche de carbone microporeux est formée par chloration, c'est-à-dire par un traitement thermique en voie gazeuse réactive réalisé avec au moins un gaz réactif de type halogène qui consiste à mettre la surface de la fibre céramique en contact avec un gaz ou mélange gazeux de type halogène, tel que du dichlore (Cl₂) par exemple, qui va transformer chimiquement le matériau céramique de la fibre en surface de manière à former une couche superficielle d'un matériau différent constitué essentiellement de carbone microporeux. Le composé halogéné présent dans le gaz réactif extrait le silicium, et éventuellement l'oxygène, présents dans le matériau de la fibre en surface sous forme d'effluents gazeux qui sont évacués. De cette manière, il subsiste sur la fibre une couche superficielle de carbone microporeux.

De même que pour le traitement thermique de phosphatation en voie gazeuse, les fibres sont traitées dans une enceinte comprenant des entrées de gaz réactifs permettant de balayer les fibres avec un gaz ou mélange gazeux de type halogène et au moins un conduit d'évacuation pour éliminer les effluents gazeux dégagés lors des réactions chimiques. Le ou les gaz réactifs choisis permettent de réaliser les traitements thermiques à des températures inférieures à la température de stabilité thermique des fibres. Dans le cas d'une formation d'une couche carbone microporeux par chloration au dichlore, la température du traitement est comprise entre 450°C et 900°C.

L'épaisseur de la couche de carbone microporeux formée par transformation chimique de la fibre en surface peut être ajustée en contrôlant la température et/ou la durée du traitement vis-à-vis de la réactivité du gaz ou du mélange gazeux de type halogène avec le matériau des fibres.

Le gaz réactif de type halogène est notamment choisi parmi au moins le dichlore, le difluor et le chlorure d'hydrogène.

Après la formation de la couche de carbone microporeux par chloration, les fibres sont ensuite soumises, comme décrit ci-avant, à un traitement thermique de phosphatation en voie gazeuse réactive afin de former le revêtement de protection contre l'oxydation. La couche de carbone microporeux agissant comme une membrane de diffusion des espèces, la transformation de la fibre au contact des espèces gazeuses de phosphatation est réalisée sous la couche de carbone microporeux, le ou les systèmes bicouches de verre phosphosilicaté et de carbone microporeux étant formés sous la couche de carbone microporeux formée préalablement tandis que la couche de cristaux de pyrophosphate de silicium est formée au-dessus de la couche de carbone microporeux.

La figure 4 montre une fibre SiC 40 de type Tyranno S ayant subi un traitement thermique en voie gazeuse réactive réalisé sous vapeurs de dichlore à 525°C pendant une durée de 40 minutes permettant de former sur la fibre une couche de carbone microporeux 41. La fibre 40 a ensuite subi un traitement de phosphatation réalisé dans un four maintenu à une température de 700°C pendant 3 heures et dans lequel la phase gazeuse d'agent phosphoré est obtenue avec de l'acide phosphorique à 14,6 mol/L avec un débit d'acide de 1,21.10⁻⁶ L/s et un débit d'azote de 4,3.10⁻³ L/s. Après ce traitement de phosphatation, la fibre 40 comporte un revêtement de protection 400 qui présente une morphologie bicouche unique et qui se compose d'une couche de surface de cristaux de pyrophosphate de silicium 401 présente au-dessus de la couche de carbone microporeux 41 et d'un système bicouche 410 comprenant une couche d'un verre phosphosilicaté 411 et une couche de carbone microporeux 412 disposées entre la fibre 40 et la couche de carbone microporeux 41.

Les fibres SiC peuvent être traitées sous quelque forme de structure fibreuse que ce soit, par exemple fils, mèches, torons, câbles, tissus, feutres, mats et même préformes bi- ou tridimensionnelles.

Les fibres SiC traitées selon le procédé de l'invention peuvent être avantageusement utilisées pour la réalisation de préformes fibreuses de pièce en matériau composite.

La fabrication de pièces en matériau composite renforcé par des fibres céramiques est bien connue. Elle comprend généralement la réalisation d'une préforme fibreuse céramique dont la forme est voisine de celle de la pièce à fabriquer et la densification de la préforme par une matrice.

La préforme fibreuse constitue le renfort fibreux de la pièce dont le rôle est essentiel vis-à-vis des propriétés mécaniques. La préforme est obtenue à partir de textures ou structures fibreuses en fibres céramiques qui se présentent sous forme de fils, câbles, tresses, tissus, feutres, etc. La mise en forme est réalisée par bobinage, tissage, empilage, et éventuellement aiguilletage de strates bidimensionnelles de tissu ou de nappes de câbles...

Les fibres SiC de la préforme fibreuse sont traitées conformément au procédé de l'invention. Les fibres peuvent être traitées avant (c'est-à-dire au niveau de chaque texture fibreuse utilisée pour former la préforme) ou après la réalisation de la préforme.

La densification de la préforme fibreuse peut être réalisée par voie liquide (imprégnation par une résine précurseur de la matrice et transformation par réticulation et pyrolyse, le processus pouvant être répété) ou par voie gazeuse (infiltration chimique en phase vapeur de la matrice), ou encore par voies liquide et gazeuse combinées.

L'invention s'applique notamment à la réalisation de pièces en matériau composite à matrice céramique (CMC) formées par un renfort fibreux en fibres SiC densifié par une matrice céramique, notamment carbure, nitrure, oxyde réfractaire, etc. Des exemples typiques de tels matériaux CMC à fibres céramiques sont les matériaux SiC-SiC (renfort en fibres de carbure de silicium et matrice en carbure de silicium).

Des essais comparatifs ont été réalisés entre des fibres SiC ayant subi le traitement de phosphatation selon l'invention et des mêmes fibres SiC n'ayant pas subi un tel traitement.

Les tableaux ci-après montrent les gains obtenus en durée de vie (sous contrainte à 650°C) et en tenue à l'oxydation (sous atmosphère oxydante à 650°C) pour différents types de fibres SiC ayant subies deux catégories de traitement selon l'invention. Le tableau I montre les résultats pour une première catégorie de traitement correspondant à un traitement direct de phosphatation sur fibres SiC brutes réalisé dans un four maintenu à une température comprise entre 580°C et 700°C pendant 1 à 4 heures dans lequel la phase gazeuse d'agent phosphoré est obtenue avec de l'acide phosphorique à 14,8 mol/L avec un débit d'acide de 1,21.10⁻⁶ L/s et un débit d'azote compris entre 4,17.10⁻³ et 7,5.10-3 L/s. Le tableau II montre les résultats pour une deuxième catégorie de traitement comprenant un traitement préalable de chloration des fibres SiC réalisé sous dichlore pur avec un débit compris entre 4,2.10-3 et 1,7.10-2 L/s de manière à former une couche de carbone micro-mésoporeux suivi d'un traitement de phosphatation réalisé dans les mêmes conditions que pour la première catégorie.

**Tableau I**

| Type de fibres SiC | Gain en tenue à l'oxydation | Gain en durée de vie |
|---|---|---|
| Nicalon | 3,4 | non testé |
| Tyranno S | 5,3 | 8 |
| Tyranno Lox-M | 3,55 | non testé |

**Tableau II**

| Type de fibres SiC | Gain en tenue à l'oxydation | Gain en durée de vie |
|---|---|---|
| Nicalon | 2,8 | 10000 |
| Tyranno S | 20 | 10 |
| Tyranno Lox-M | 2,95 | 20-300 |

## Revendications

1. Procédé de traitement de fibres de carbure de silicium (10) comprenant un traitement thermique de phosphatation en voie gazeuse réactive de manière à former autour de chaque fibre (10) un revêtement de protection contre l'oxydation (100) comprenant une couche de surface de cristaux de pyrophosphate de silicium (101) et au moins un système bicouche sous-jacent (110) comprenant une couche d'un verre phosphosilicaté (111) et une couche de carbone microporeux (112).

2. Procédé selon la revendication 1, **caractérisé en ce que**, avant le traitement thermique de phosphatation en voie gazeuse réactive, une couche de carbone microporeux ou micro-mésoporeux (31) est formée sur la surface de chaque fibre (30), ladite couche de carbone microporeux ou micro-mésoporeux (31) étant interposée entre la couche de surface de cristaux de pyrophosphate de silicium et ledit au moins un système bicouche comprenant une couche d'un verre phosphosilicaté et une couche de carbone microporeux.

3. Procédé selon la revendication 2, **caractérisé en ce que** la formation d'une couche de carbone micro-mésoporeux (31) est réalisée par une attaque de chaque fibre (30) en surface avec un agent phosphoré en voie gazeuse suivie d'un traitement d'élimination du verre phosphosilicaté et du pyrophosphate de silicium formés lors de l'attaque à l'acide phosphorique vaporeux.

4. Procédé selon la revendication 3, **caractérisé en ce que** le traitement d'élimination du verre phosphosilicaté et du pyrophosphate de silicium est réalisé par attaque des fibres en surface avec un composé basique.

5. Procédé selon la revendication 2, **caractérisé en ce que** la formation d'une couche de carbone microporeux (41) est réalisée par traitement thermique en voie gazeuse réactive réalisé avec au moins un gaz réactif de type halogène.

6. Procédé selon la revendication 5, **caractérisé en ce que** le gaz réactif est choisi parmi au moins le dichlore, le difluor et le chlorure d'hydrogène.

7. Procédé selon l'une quelconque des revendications 1 à 6, **caractérisé en ce que** le revêtement de protection contre l'oxydation (100) présente une épaisseur comprise entre 50 nm et 1µm.

8. Procédé selon l'une quelconque des revendications 1 à 5, **caractérisé en ce que** le traitement thermique de phosphatation en voie gazeuse réactive est réalisé à des températures inférieures à la température de stabilité thermique des fibres de carbure de silicium.

9. Procédé de fabrication d'une préforme fibreuse comprenant la formation d'une structure fibreuse au moins à partir de fibres de carbure de silicium, **caractérisé en ce que** les fibres (10) ont été traitées conformément au procédé de traitement selon l'une quelconque des revendications 1 à 8.

10. Procédé selon la revendication 9, **caractérisé en ce que** les fibres (10) sont traitées avant la formation de la structure fibreuse.

11. Procédé selon la revendication 9, **caractérisé en ce que** les fibres (10) sont traitées après la formation de la structure fibreuse.

12. Procédé de fabrication d'une pièce en matériau composite comprenant la réalisation d'une préforme fibreuse conformément au procédé selon l'une quelconque des revendications 9 à 11 et la densification de ladite préforme.

13. Structure fibreuse comprenant des fibres de carbure de silicium (10) **caractérisée en ce que** chaque fibre comporte sur au moins une partie de sa surface un revêtement de protection contre l'oxydation (100) comprenant une couche de surface de cristaux de pyrophosphate de silicium (101) et au moins un système bicouche sous-jacent (110) comprenant une couche d'un verre phosphosilicaté (111) et une couche de carbone microporeux (112).

14. Structure selon la revendication 13, **caractérisée en ce que** chaque fibre (30) de carbure de silicium comporte en outre sur au moins une partie de sa surface une couche de carbone microporeux ou micro-mésoporeux (31), ladite couche de carbone microporeux ou micro-mésoporeux étant interposée entre la couche de surface de cristaux de pyrophosphate de silicium et ledit au moins un système bicouche comprenant une couche d'un verre phosphosilicaté et une couche de carbone microporeux.

15. Pièce en matériau composite comprenant un renfort fibreux constituée par une structure fibreuse selon la revendication 13 ou 14 et densifié par une matrice.

## Patentansprüche

1. Verfahren zur Behandlung von Fasern aus Siliziumkarbid (10), umfassend eine thermische Phosphatierungsbehandlung in reaktiver Gasphase, um um jede Faser (10) herum eine Oxidationsschutzbeschichtung (100) zu bilden, die eine Oberflächenschicht aus Siliziumpyrophosphat-Kristallen (101) und wenigstens ein darunter liegendes Zweischichtsystem (110) mit einer Schicht aus einem Phosphorsilicatglas (111) und einer mikroporösen Kohlenstoffschicht (112) umfasst.

2. Verfahren nach Anspruch 1, **dadurch gekennzeichnet, dass** vor der thermischen Phosphatierungsbehandlung in reaktiver Gasphase eine mikroporöse oder mikro-mesoporöse Kohlenstoffschicht (31) auf der Oberfläche einer jeden Faser (30) ausgebildet wird, wobei die mikroporöse oder mikro-mesoporöse Kohlenstoffschicht (31) zwischen der Oberflächenschicht aus Siliziumpyrophosphat-Kristallen und dem wenigstens einen Zweischichtsystem, das eine Schicht aus einem Phosphorsilicatglas und eine mikroporöse Kohlenstoffschicht umfasst, eingefügt ist.

3. Verfahren nach Anspruch 2, **dadurch gekennzeichnet, dass** die Bildung einer mikro-mesoporösen Kohlenstoffschicht (31) durch ein Oberflächenätzen einer jeden Faser (30) mit einem Phosphormittel in Gasphase, an das sich eine Behandlung zum Entfernen des Phosphorsilicatglases und des Siliziumpyrophosphats, die während des Ätzens mit dampfförmiger Phosphorsäure gebildet werden, anschließt, vollzogen wird.

4. Verfahren nach Anspruch 3, **dadurch gekennzeichnet, dass** die Behandlung zum Entfernen des Phosphorsilicatglases und des Siliziumpyrophosphats durch Oberflächenätzen der Fasern mit einer basischen Verbindung durchgeführt wird.

5. Verfahren nach Anspruch 2, **dadurch gekennzeichnet, dass** die Bildung einer mikroporösen Kohlenstoffschicht (41) durch Wärmebehandlung in reaktiver Gasphase, die mit wenigstens einem reaktiven Gas vom Typ Halogen durchgeführt wird, vollzogen wird.

6. Verfahren nach Anspruch 5, **dadurch gekennzeichnet, dass** das reaktive Gas aus wenigstens Dichlor, Difluor und Chlorwasserstoff ausgewählt ist.

7. Verfahren nach einem der Ansprüche 1 bis 6, **dadurch gekennzeichnet, dass** die Oxidationsschutzbeschichtung (100) eine Dicke im Bereich zwischen 50 nm und 1 µm aufweist.

8. Verfahren nach einem der Ansprüche 1 bis 5, **dadurch gekennzeichnet, dass** die thermische Phosphatierungsbehandlung in reaktiver Gasphase bei Temperaturen unterhalb der Temperatur thermischer Stabilität der Siliziumkarbidfasern durchgeführt wird.

9. Verfahren zur Herstellung eines Faservorformlings, umfassend die Bildung einer Faserstruktur wenigstens aus Siliziumkarbidfasern, **dadurch gekennzeichnet, dass** die Fasern (10) gemäß dem Behandlungsverfahren nach einem der Ansprüche 1 bis 8 behandelt worden sind.

10. Verfahren nach Anspruch 9, **dadurch gekennzeichnet, dass** die Fasern (10) vor der Bildung der Faserstruktur behandelt werden.

11. Verfahren nach Anspruch 9, **dadurch gekennzeichnet, dass** die Fasern (10) nach der Bildung der Faserstruktur behandelt werden.

12. Verfahren zur Herstellung eines Teils aus Verbundwerkstoff, umfassend die Herstellung eines Faservorformlings gemäß dem Verfahren nach einem der Ansprüche 9 bis 11 und die Verdichtung des Vorformlings.

13. Faserstruktur, die Siliziumkarbidfasern (10) umfasst, **dadurch gekennzeichnet, dass** jede Faser auf wenigstens einem Teil ihrer Oberfläche eine Oxidationsschutzbeschichtung (100) umfasst, die eine Oberflächenschicht aus Siliziumpyrophosphat-Kristallen (101) und wenigstens ein darunter liegendes Zweischichtsystem (110) mit einer Schicht aus einem Phosphorsilicatglas (111) und einer mikroporösen Kohlenstoffschicht (112) umfasst.

14. Struktur nach Anspruch 13, **dadurch gekennzeichnet, dass** jede Faser (30) aus Siliziumkarbid ferner auf wenigstens einem Teil ihrer Oberfläche eine mikroporöse oder mikro-mesoporöse Kohlenstoffschicht (31) umfasst, wobei die mikroporöse oder mikro-mesoporöse Kohlenstoffschicht zwischen der Oberflächenschicht aus Siliziumpyrophosphat-Kristallen und dem wenigstens einen Zweischichtsystem, das eine Schicht aus einem Phosphorsilicatglas und eine mikroporöse Kohlenstoffschicht umfasst, eingefügt ist.

15. Teil aus Verbundwerkstoff, das eine Faserverstärkung, welche durch eine Faserstruktur nach Anspruch 13 oder 14 gebildet und durch eine Matrix verdichtet ist, umfasst.

## Claims

1. A method of treating silicon carbide fibers (10), the method comprising phosphating heat treatment in a reactive gas so as to form a coating around each fiber (10) for protection against oxidation (100), the coating comprising a surface layer of silicon pyrophosphate crystals (101) and at least one underlying bilayer system (110) comprising a layer of a phosphosilicate glass (111) and a layer of microporous carbon (112).

2. A method according to claim 1, **characterized in that** before the phosphating heat treatment in a reactive gas, a micro-mesoporous or microporous carbon layer (31) is formed on the surface of each fiber (30), said layer of micro-mesoporous or microporous carbon (31) being interposed between the surface layer of silicon pyrophosphate crystals and said at least one bilayer system comprising a layer of a phosphosilicate glass and a layer of microporous carbon.

3. A method according to claim 2, **characterized in that** a layer of micro-mesoporous carbon (31) is formed by etching the surface of each fiber (30) with a phosphorus-containing agent in a gas followed by treatment to eliminate the phosphosilicate glass and the silicon pyrophosphate formed during the etching with phosphoric acid vapor.

4. A method according to claim 3, **characterized in that** the treatment for eliminating the phosphosilicate glass and the silicon pyrophosphate is performed by etching the surface of the fibers with a basic compound.

5. A method according to claim 2, **characterized in that** a layer of microporous carbon (41) is formed by heat treatment in a reactive gas performed with at least one reactive gas of halogen type.

6. A method according to claim 5, **characterized in that** the reactive gas is selected from at least chlorine gas, fluorine gas, and hydrogen chloride.

7. A method according to any one of claims 1 to 6, **characterized in that** the protective coating against oxidation (100) presents thickness lying in the range 50 nm to 1 µm.

8. A method according to any one of claims 1 to 5, **characterized in that** the phosphating heat treatment in a reactive gas is performed at temperatures lower than the thermal stability temperature of silicon carbide fibers.

9. A method of fabricating a fiber preform comprising forming a fiber structure at least from silicon carbide fibers, the method being **characterized in that** the fibers (10) are treated in accordance with the treatment method of any one of claims 1 to 8.

10. A method according to claim 9, **characterized in that** the fibers (10) are treated before forming the fiber structure.

11. A method according to claim 9, **characterized in that** the fibers (10) are treated after forming the fiber structure.

12. A method of fabricating a composite material part comprising making a fiber preform according to the method of any one of claims 9 to 11, and densifying said preform.

13. A fiber structure comprising silicon carbide fibers (10) and **characterized in that** each fiber includes over at least a fraction of its surface a protective coating against oxidation (100) comprising a surface layer of silicon pyrophosphate crystals (101) and at least one underlying bilayer system (110) comprising a layer of a phosphosilicate glass (111) and a layer of microporous carbon (112)

14. A structure according to claim 13, **characterized in that** each silicon carbide fiber (30) also includes on at least a fraction of its surface a layer of micro-mesoporous or microporous carbon (31), said layer of micro-mesoporous or microporous carbon being interposed between the surface layer of pyrophosphate crystals and said at least one bilayer system comprising a layer of a phosphosilicate glass and a layer of microporous carbon.

15. A part made of composite material including fiber reinforcement constituted by a fiber structure according to claim 13 or claim 14, and densified by a matrix.
